# EUROPEAN PATENT SPECIFICATION

(11) **EP 1 088 618 B1**
(45) Date of publication and mention of the grant of the patent: **17.03.2004**
(21) Application number: 00121090.5
(22) Date of filing: 28.09.2000
(51) Int. Cl.: B23Q 1/70, B23Q 5/10

(54) **High speed electrical spindle with hybrid rotor support in wood-working machines.**
Elektrische Hochgeschwindigkeitsspindel mit Hybridrotorlagerung in Holzbearbeitungsmaschinen
Broche électrique à haute vitesse avec support de rotor hybride dans des machines travaillant le bois

(30) Priority: 30.09.1999 IT RN990031 U
(43) Date of publication of application: 04.04.2001
(73) Proprietor: SCM GROUP S.p.A., 47900 Rimini (IT)
(72) Inventor: Leonardi, Paolo, 47900 Rimini (IT)
(74) Representative: Lanzoni, Luciano

(56) References cited:
- DE-C- 4 316 411
- PATENT ABSTRACTS OF JAPAN vol. 2000, no. 15, 6 April 2001 (2001-04-06) & JP 2000 334604 A (DISCO ABRASIVE SYST LTD), 5 December 2000 (2000-12-05)

## Description

The present invention relates to an operative driving unit of the type known with the name of electrical spindle, according to the preamble of claim 1, able directly to drive a rotating tool, for chip removing operations, destined to be applied on numeric control work centres of a known kind for working wood and the like, and destined therein to perform substantially milling operations; in particular it concerns an electrical spindle of this type provided with a system for supporting the rotor on two sections or segments thereof where anteriorly, i.e. from the part destined to be coupled with the tool, it comprises towards the frame a constraining complex kinematically equivalent to a rotoidal couple with shoulders, i.e. with reaction capability against radial and axial thrusts in the two directions, and posteriorly a constraining complex equivalent to a simple rotoidal couple, i.e. with reaction capability only in the radial direction.

The aforesaid electrical spindles contemplate, in normal executions, arrangements which vary according to the type of elements destined to support the rotor, both in regard to the design of the supports employed, and to the materials employed therein, as well as to their positioning strategy, to form an effective constraining complex.

In the prior art of the sector, such electrical spindles for high speed chipping are known, able to be supported on CNC work centres of the wood working machines, groups which are also produced by the same Applicant, outfitted with a rigid rotor supported both anteriorly and posteriorly by rolling bearings belonging to the normal or special production series of the latter elements, specifically rolling bearings with classic execution where the rolling races are represented by the inner and outer rings of the bearing itself, constructed in the types with exclusively radial load capacity, with exclusively axial load capacity or thrust bearings, with radial-axial load capacity, the latter types being called deep throated or with oblique contact between balls and races; or combinations of all these types, such as - with reference to the normal straight lines of the contact - in the known "O", "X", or "tandem" arrangements.

A particular solution pertaining to an arrangement of a part of the rolling bearings in an electrical spindle, relating in particular to a pre-loading system with membrane springs for the rear bearing, is also disclosed in Italian Patent no. 1279580 filed in the name of the Applicant.

Also known are electrical spindles presenting supporting solutions with integrated rolling elements, rolling directly on races obtained on appropriately machined and hardened parts or elements of the shaft or of the frame, either in only one or in both shaft support segments.

Another type of electrical spindles destined to the same purposes as the previous ones is that where the rotor, relative to external stresses, is completely supported and balanced with respect to the frame in a fluid-static and/or fluid-dynamic manner in at least two segments thereof, the term fluid static meaning the support provided by a fluid maintained under pressure within a meatus of the support by means of appropriate pump device, and the term fluid dynamic meaning the support provided by a fluid where in a meatus of the support is generated, at the interface with the shaft, a pressure range deriving from the velocity range induced in the meatus by the rotation of the shaft itself.

The aforementioned known solution of electrical spindle with rotor supported by roller bearings both anteriorly, i.e. proximately to the tool, and posteriorly, i.e. distally to the tool, presents a series of drawbacks known to the manufacturers of electrical spindles, particularly concentrated in the rear bearing set. The main problem derives from the different expansion which in the axial sense occurs for frame and rotor. In other words the heat developed both in the stator pack and in the rotor pack during the operation of the electrical machine, establishes highly different temperature ranges between frame and rotor - as thermographic tests have thoroughly demonstrated - ranges which are applied on considerably different geometries and operate under different heat exchanging conditions, wherefrom derives such a range of displacements-deformations as to vary the original congruence of the two frame and rotor parts and such as to create conditions of mutual co-action therebetween, and hence of forcing between the rolling elements and the related races, interposed between frame and rotor to close the overall geometry of the electrical spindle. Where such forcing, most of the times, also has non axially symmetrical nature, as a consequence of the fact that in addition to the difference in axial expansion between frame and rotor, flexural deformations are often generated due to the different elongation of the fibres in different meridians of the frame, because of the different heat exchange thereof with the contour. It is evident that from these co-actions derives a state of tension on races and rolling elements which experience shows to be perfectly able to lead to the premature damaging and inoperative condition of the rear bearing assembly. And since such damaging is usually detected over periods of times which may be long, there is often a non negligible period in which the irregular operation of the rear assembly negatively influences the duration of the forward bearing assembly.

Still remaining within the scope of electrical spindles having rotor support completely entrusted to the rolling bearings, further known problems derive from the correct assignment of the pre-loading on said rear bearing assembly, necessary to maintain a correct contact between balls and races at high rotation speeds. This pre-loading, because of the aforesaid mutual heat expansion phenomena, shall necessarily be obtained by elastic means, i.e. not by interference between rigid geometric elements, and this to allow for the aforementioned possibility of the mutual expansion between frame and rotor. This, however, can be obtained by generally introducing considerable complications in the design, since solutions always require a very high degree of precision in the manufacture of the components constituting the assembly to guarantee the mutual sliding ability.

The most common solutions are those in which a ring nut is loaded axially by some springs arranged on the circumference thereof, said ring nut in turn acting axially on the outer ring of the rear bearing, which should guarantee the pre-loaded contact of the balls on the races. However in these cases it frequently occurs that the axial motion of the ring nut fails to take place regularly, and as a consequence the balls operate under excessive or non existent loading conditions, with the latter condition undoubtedly representing the more deleterious case at high speeds. All this can most likely occur also because the position where the rear bearing assembly is located is the hottest, not being primarily ventilated by the paraxial flow of air for chip aspiration and cooling which invests the electrical spindle from the front, nor is said rear position affected by the ventilation somehow produced by the tool, in addition to the fact that it is subject to the convective flow of hot air coming from the electrical stator and rotor packs which, given the normal vertical position of the electrical spindle with the tool at the bottom, is directed upwards.

Another drawback is presented also by the alternative solution to the previous one for the realisation of a rear bearing assembly, specifically the one described in the aforementioned patent no. 1279580 by the Applicant, which discloses a solution in which the exterior part of the rear bearing assembly is able axially to slide by virtue of a shock absorber obtained with a pair of metal membranes constituting a sort of elastic articulated parallelogram destined simultaneously to allow the mobility of the cartridge and to maintain its original orientation. The aforesaid drawback derives from the fact that the two membranes made of steel lamina constitute a heat passage of very limited effectiveness between the outer periphery of the rear bearing assembly and the frame, where the heat exchanging capacity is not better even in the volume of air included between the two membrane planes, such volume being practically sealed and deprived of all possibilities for replacing the air contained therein. Under such conditions it is readily understood that all the heat generated and absorbed by the rear bearing assembly cannot be easily dispersed and that this constitutes a severe drawback for the solution with dual lamina shock absorber, due to the high temperature that in this case are generated.

Equally, as regards the aforementioned electrical spindles with completely fluid-static or fluid-dynamic support, in particular those with gaseous lubrication, a severe drawback noted in their front part should be noted. In this area proximate to the tool, and therefore to the work processes, the electrical spindle is subjected to very high radial loads, considerably greater than those which - thanks to the length ratio between overhanging and non overhanging segments - are generated in the rear support. Thus, in case of radial impacts on the tool (i.e. at the start of work on resistant materials) the radial load bearing threshold of the forward bearing with gaseous lubrication can easily be exceeded, so that the fixed and movable cylindrical surfaces constituting the meatus could actually be mated as a result of the breakage of the existing veil of gaseous lubricant, immediately damaging and rendering inoperative said forward bearing assembly, and hence the entire electrical spindle. This circumstance practically never occurs in the rear bearing assembly where loads, as stated previously, are moderated by the aforementioned favourable lever ratio between the shaft segments, thus preventing the occurrence of the conditions for the mating under load of the surfaces of the rotoidal couple with gaseous lubrication.

The aim of the electrical spindle of the present invention is to eliminate the drawbacks mentioned above. The invention, as it is defined in claim 1, thus solves both the problem of obtaining an electrical spindle where all types of unequal axial expansion between frame and rotor are freely allowed, without thereby inducing forcing of any kind between the parts, and the problem of having an electrical spindle with a high radial and axial load bearing capacity in the front part, near the working tool, with a negligible sensitivity to the effects of radial and axial impacts.

The idea developed hereafter achieves the aforesaid aims with a configuration of the electrical spindle of the aforesaid type in which are present both a rolling bearing assembly, and a gaseous lubrication bearing.

More in detail the invention relates to an electrical spindle for driving in rotation high-speed chipping tools as defined in claim 1.

The advantages obtained by means of the present invention essentially consist of the fact that a machine is thereby obtained which combines all the advantages of rolling bearings, such as high radial load bearing capacity and impact resistance, said rolling elements being positioned where such characteristics are essential, i.e. in the forward working area of the tool, more stressed; whilst on the other hand are simultaneously solved all the problems which the rolling bearings could present, by means of the elimination from those operating areas, such as the rear one, where pre-loads can become uncertain and heat generation can become intense, having replaced them therein with a gaseous lubrication bearing, which in that location finds its best application thanks to the reduction of the influence of radial loads and impacts, and to the practical insensitivity to heat effects, and thus perfectly able to operate where vertical convective currents transport all the heat of the electric motor and where there is no ventilation from the tool and from the aspiration air which enters anteriorly from the machine.

Collateral advantages also derive from the fact that the gaseous lubricant, suitably conveyed, is exploited both to obtain a cooling effect within the electrical spindle, albeit reduced given the smallness of the flow rates involved, and to maintain a bland pressurisation within the internal compartment of the electrical mandrel, assisting labyrinth seals in preventing the entry of the dusts resulting from the machining processes through the front rolling bearing assembling, which, as is well known, would constitute a considerable problem for the working life of the rolling bearings themselves.

Advantages are also due to the ease with which the shaft allows for the correct mounting of the assembly relative to the frame, in the aforementioned hybrid support solution with forward rolling bearings and rear gaseous lubrication bearing, and this without any kind of forcing deriving from the mounting, provided the normal tolerances required are met.

The invention is described more in detail below, with the aid of the drawing which shows an embodiment, provided purely by way of non limiting example:

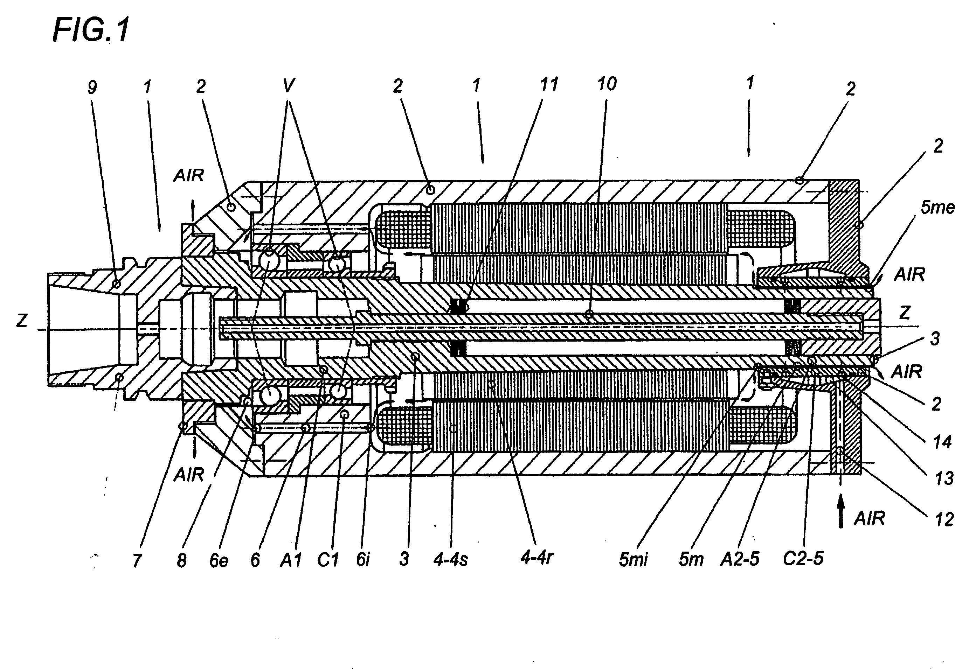

- Figure 1 shows a section view of the electrical spindle 1, sufficient in itself to represent the invention, where for the sake of simplicity the work centre whereto the electrical spindle belong and the working tool are not shown.

This milling electrical spindle 1 - of a substantially known type with respect to many constructive details, although innovative in its solution with hybrid support for the shaft 3, obtained through the adoption of rolling bearing V at the tool attachment side, i.e. anteriorly, and of a bearing 5 with gaseous lubrication at the opposite side, i.e. posteriorly - is externally composed of a frame 2, comprising also all parts integral to the main external shell, such as a closing head in the forward part, a closing bottom in the rear part, and the fixed part of the bearing 5 with gaseous lubrication, also posteriorly.

Said frame, destined externally to be fastened onto a movable carriage of the work centre, presents as usual an inner cavity, substantially having cylindrical segments which are axially symmetrical relative to an axis Z thereof, destined mainly to house both the rotating shaft 3 and the parts constituting the electrical motor 4.

The rotating shaft 3 is the other fundamental structural component, and it is substantially hollow and anteriorly able to retain a tool through a forward conical attachment 9. An axial thrust element, in practice a rod 10, longitudinally traverses the cavity of the shaft 3, said rod 10 being tasked with expelling the tool from the conical cavity 9 by the action of external thrust means, such as common pneumatic linear actuators, not shown in the figure because they are well known. A series of springs 11 of the Belleville washer type impart a return action on the rod 10, preventing it from acting on the tool in the absence of said opposite action of the pneumatic actuators.

A dynamic seal with circular contact, i.e. a so-called labyrinth, is mounted in the manner of a ring nut 7 in the front part of said shaft 3, constituting a screen against the passage of incoming dusts and pollutants, and hence configuring a blow-by passage of reduced size between said ring nut 7 and the front head of said frame 2, for the forward closure of the electrical spindle. Said blow-by passage identified by ring nut 7 represents the forward communication of the inner cavity of the electrical spindle with the exterior.

Said shaft 3 is supported by the frame 2 in two axial segments thereof, the forward one indicated as A1, and the rear one indicated as A2, where the corresponding axial segments of the frame destined to support the shaft are C1, the front one, and C2, the rear one. The support bearings between shaft and frame are thus positioned in the radial spaces between shaft and frame, said forward radial space, i.e. between A1 and C1, and respectively rear radial space, i.e. between A2 and C2.

In said forward radial space is positioned an assembly V of rolling ball bearings in oblique contact with related spacers and tightening ring nuts, which in the example of Figure 1 presents an "O" arrangement, and which is therefore able to provide both a radial reaction and an axial reaction. The inner rings of the bearings are tightened on a shoulder of the shaft 3 by a ring nut screwed onto the same shaft, also through spacer, whilst the outer rings are tightened on a shoulder of the frame by the forward head, also through spacer.

The geometry of the forward bearing assembly V, thus the short axial distance of the two ball bearings present therein, is such that it is substantially equivalent, in terms of constraining design, to a fixed hinge positioned in the area A1.

In said rear radial space is positioned a gaseous lubrication bearing 5, of substantially known type, which presents a fixed part configuring a cylindrical recess (said rear support segment C2, belonging to the frame or being integral therewith) and a rotating part configuring a cylindrical tang (said rear support segment A2, belonging to the shaft or being integral therewith). Between said tang and said recess of the gaseous lubrication bearing 5 is radially identified a meatus 5m, where the pressurised gas provides for the support of the shaft. The operation of the bearing 5 is of the fluid-static type, with the gas maintained under pressure by a system external to the electrical spindle, typically a compressed air line, and where in any case during high speed rotation, fluid-dynamic load bearing contributions may take place.

Such bearing 5 is substantially equivalent, in terms of constraining design, to a slide hinge positioned in the area A2.

The shaft 3 is obviously supported in such a way as to assume the axis Z of the frame as its axis of rotation.

The meatus 5m, with cylindrical annulus shape, has one of its ends 5me, oriented exteriorly, i.e. posteriorly, and a remaining end 5mi oriented towards the inner cavity of the electrical spindle.

The gaseous lubricant (in the specific case purified and conditioned air) arrives from the line feeding the load bearing meatus 5m through a main hole 12 drilled in the frame, to be then distributed in a circumferential chamber 13, surrounding the meatus 5m, where radial holes 14 are present for the injection of the gas to said meatus 5m.

The aforesaid electric motor 4 comprises an electric rotor pack 4r, positioned at the periphery of the shaft 3, between said support areas A1 and A2 thereof, and a respective electric stator pack 4s, positioned in the cavity of the frame and integral therewith, between said support areas C1 and C2 thereof.

In the front support area obtained on the frame, previously indicated as C1, in its radial thickness are obtained ducts 6 with axial direction. Said ducts 6 have their first orifice 6i oriented internally towards the cavity of the electrical spindle, and their second orifice 6e oriented externally, i.e. towards the front part, where exactly the orifice 6e faces the annular chamber 8 axially located between the front part of said bearing assembly V and the labyrinth seal 7. The ducts 6 have the specific function of constituting a bypass relative to the axial traversing of the front bearing assembly V by the flow of outgoing gaseous lubricant, coming from the interior of the electrical spindle and introduced therein by the outflow which takes place from the end 5mi of the meatus 5m of the gaseous lubrication rear bearing 5, where the inner cavity of the electrical spindle in operating condition is such that it can be traversed from the end 5mi of the meatus 5m to said orifice 6i of the duct 6. If such gas, to exit anteriorly through the labyrinth 7, should traverse the bearing assembly V instead of said ducts 6, it would slowly cause the lubricating grease permanently present in the rolling bodies to be washed away, rapidly leading to the failure of the bearing, which instead does not take place at all because the path represented by the ducts 6 is a path of least resistance for the gas coming from the rear, relative to the traversing of the front bearing assembly V.

Functionally, the gaseous lubricant enters from the hole 12, fills the annular chamber 13 and, through the radial holes 14, invades the meatus 5m of the rear bearing 5, then outflows respectively from the ends 5me (outwardly, at the rear) and 5mi (towards the interior of the electrical spindle), so that the load bearing action on the tang A2 starts, possibly enhanced by the fluid-dynamic effects consequent to the rotation. The gaseous lubricant from the end 5mi can traverse the entire interior cavity of the electrical spindle, through the gap of the electric motor, up to the entry 6i of the ducts 6, secondarily providing also a cooling contribution and slightly pressurising the inner cavity to the labyrinth 7, where the gas is destined to exit anteriorly.

During the operation, as mentioned previously and thanks to the presence anteriorly of the rolling bearings V, the electrical spindle is perfectly able to withstand the high shearing stresses during the work processes, and the possible impacts deriving therefrom, without receiving any damage, whilst posteriorly any kind of different expansion between frame and rotor can take place without thereby inducing any co-action condition between the parts, which remain axially free from each other.

The electrical spindle thus structure therefore achieves the set aims thanks to the solutions introduced and to the mutual dispositions illustrated for the different elements, without thereby requiring excessively to alter its substantial and usual geometry, hence making it perfectly suitable for applications on machines where units preceding the invention, but externally similar thereto are already operating.

The invention thus conceived can be subject to numerous modifications and variations, as defined in the appended claims, without thereby departing from the scope of the inventive concept.

## Claims

1. An electrical spindle (1) for driving in rotation high-speed chipping tools on numeric control work centres for working wood and the like, comprising at least:
- a frame (2) also composed of multiple parts made mutually integral, internally hollow and with internal geometry having substantially cylindrical segments and being substantially symmetrical about a longitudinal axis Z, said frame being destined externally to be fastened onto said work centre, and internally to the support of a shaft (3) rotating relative thereto; said shaft (3) having axial symmetry, being also composed of multiple parts made mutually integral and destined to retain a tool in its front portion, and being supported in two of its own front (A1) and rear (A2) axial segments corresponding to respective axial segments (C1) and (C2) of the frame, so that its axis of rotation coincides with said axis Z of the frame;
- a rotatory electric motor (4) with its shaft coinciding with said shaft (3) whose rotor electrical pack (4r) is a part of the periphery of said shaft (3) and positioned between said front (A1) and rear (A2) part, and whose stator electrical pack (4s) is integral to said frame (2);
- one or more bearings (V) with rolling elements interposed in the radial space between said front segment (A1) of the shaft and the corresponding said segment (C1) of the frame;
**characterised in that** the support of said shaft (3) in correspondence with its own said rear segment (A2) takes place by means of a bearing (5) with gaseous lubrication having radial load bearing capacity, of the type with gas under pressure in a meatus (5m) existing between circular cylindrical surfaces, where the rotating part of said bearing (5) is represented by the same rear shaft segment (A2) shaped as a cylindrical tang and the fixed part is represented by the same said segment (C2) of frame shaped as a cylindrical recess with holes for the injection of the gaseous lubricant, said meatus (5m) being defined by the radial play between said shaft segment (A2) shaped as a cylindrical tang and the corresponding said frame segment (C2) shaped as a cylindrical recess.

2. An electrical spindle as claimed in claim 1, **characterised in that** at least a rolling bearing (V) constitutes a radial and axial constraint for said shaft (3) in correspondence with its own said segment (A1), whilst said bearing (5) with gaseous lubrication constitutes an exclusively radial constraint for said shaft (3) in correspondence with its own said segment (A2).

3. An electrical spindle as claimed in claim 2, **characterised in that** for said shaft (3) said at least one rolling bearing (V) constitutes a radial and axial constraint substantially equivalent to a fixed spherical hinged positioned in correspondence with said segment (A1), whilst said gaseous lubrication bearing (5) constitutes an exclusively radial constraint substantially equivalent to a spherical hinge with slide positioned in correspondence with said segment (A2), so that said shaft (3) is constrained in isostatic manner relative to said frame (2).

4. An electrical spindle as claimed in one of the previous claims, **characterised in that** in the radial thickness of said frame (2) and in correspondence with said front segment (C1) thereof are obtained through ducts (6) provided for the outflow of the gaseous lubricant coming posteriorly from the end (5mi) of said meatus (5m) oriented towards the inner cavity of said electrical spindle (1), said ducts (6) presenting a first orifice (6i) oriented towards said inner cavity of the electrical spindle, said inner cavity being able to be traversed by the gaseous lubricant at least from said end (5mi) to said inward orifice (6i), said ducts (6) further presenting a second orifice (6e) oriented outwardly and facing the space (8) identified axially between the at least one rolling bearing (V) and a circular dynamic seal (7) anteriorly located relative to said at least one rolling bearing (V), so that said space (8) is pressurised against the entrance of dusts into said cavity of the electrical spindle, a cooling effect being also produced by means of the flow rate of fluid traversing from said end (5mi) of said meatus (5m) to said outward orifice (6e), and so that moreover the gaseous lubricant is prevented from traversing through said at least one rolling bearing (V) and the consequent washing of the related oily lubricant.

## Patentansprüche

1. Elektrische Spindel (1) für den Drehantrieb mit hoher Geschwindigkeit von spanabhebenden Werkzeugen an numerisch gesteuerten Arbeitstationen zur Bearbeitung von Holz und ähnlichem, enthaltend:
- ein Gehäuse (2), auch bestehend aus mehreren, fest miteinander verbundenen Teilen, innen hohl und mit einer internen Geometrie, die im wesentlichen zylindrische Segmente zeigt und im wesentlichen symmetrisch um eine Längsachse Z ist, wobei das genannte Gehäuse aussen dazu bestimmt ist, an der genannten Arbeitsstation befestigt zu werden und innen eine Welle (3) zu tragen, die sich im Verhältnis zu diesem dreht; wobei die genannte Welle (3) von einer axialen Symmetrie ist, ebenfalls zusammengesetzt aus mehreren, fest miteinander verbundenen Teilen, und dazu bestimmt, in ihrem vorderen Abschnitt ein Werkzeug zu halten, und wobei sie in zwei ihrer axialen vorderen (A1) und hinteren (A2) Segmente, die den jeweiligen axialen Segmenten (C1) und (C2) des Gehäuses entsprechen, so gehalten ist, dass ihre Drehachse mit der genannten Achse Z des Gehäuses übereinstimmt;
- einen elektrischen Rotationsmotor (4), dessen Welle mit der genannten Welle (3) übereinstimmt, und dessen elektrisches Rotorpaket (4r) Teil des Umfangs der genannten Welle (3) ist, angeordnet zwischen dem genannten vorderen (A1) und dem hinteren (A2) Teil, und dessen elektrisches Statorpaket (4s) fest mit dem genannten Gehäuse (2) verbunden ist;
- ein oder mehrere Lager (V) mit Wälzelementen, eingesetzt in dem radialen Raum zwischen dem genannten vorderen Segment (A1) der Welle und dem entsprechenden genannten Segment (C1) des Gehäuses;
**dadurch gekennzeichnet, dass** das Halten der genannten Welle (3) an ihrem genannten hinteren Segment (A2) mit Hilfe eines Lagers (5) mit Gasfilmschmierung und einer radialen Belastungsfähigkeit erfolgt, vom Typ mit unter Druck stehendem Gas in einem Spalt (5m), der zwischen den zylindrischen Oberflächen vorhanden ist, wo der rotierende Teil des genannten Lagers (5) durch dasselbe hintere Wellensegment (A2) dargestellt ist, ausgebildet als zylindrischer Schaft, und der feststehende Teil durch dasselbe genannte Gehäusesegment (C2) dargestellt ist, ausgebildet als zylindrische Vertiefung mit Bohrungen zum Zuführen des Gasfilmschmiermittels, und wobei der genannte Spalt (5m) durch den radialen Spielraum zwischen dem genannten, als zylindrischer Schaft ausgebildeten Wellensegment (A2) und dem entsprechenden genannten, als zylindrische Vertiefung ausgebildeten Gehäusesegment (C2) beschrieben wird.

2. Elektrische Spindel nach Patentanspruch 1, **dadurch gekennzeichnet, dass** wenigstens ein Wälzlager (V) eine radiale und axiale Halterung für die genannte Welle (3) entsprechend ihrem eigenen genannten Segment (A1) bildet, während das genannte Lager (5) mit Gasfilmschmierung eine ausschliesslich radiale Halterung für die genannte Welle (3) entsprechend ihrem eigenen genannten Segment (A2) bildet.

3. Elektrische Spindel nach Patentanspruch 2, **dadurch gekennzeichnet, dass** für die genannte Welle (3) das genannte wenigstens eine Wälzlager (V) eine radiale und axiale Halterung bildet, im wesentlichen gleichwertig einem Kugelgelenk, angeordnet entsprechend dem genannten Segment (A1), während das genannte Lager (5) mit Gasfilmschmierung ausschliesslich eine radiale Halterung bildet, im wesentlichen gleichwertig einem Kugelgelenk mit Gleitstück, angeordnet entsprechend dem genannten Segment (A2), so dass die genannte Welle (3) auf isostatische Weise im Verhältnis zu dem genannten Gehäuse (2) gehalten ist.

4. Elektrische Spindel nach einem der vorstehenden Patentansprüche, **dadurch gekennzeichnet, dass** in der radialen Dicke des genannten Gehäuses (2) und entsprechend dem genannten vorderen Segment (C1) desselben durchgehende Kanäle (6) erhalten sind, vorgesehen zum Ausfliessen des genannten, von hinten von dem Ende (5mi) des genannten, zu dem inneren Hohlraum der genannten elektrischen Spindel (1) ausgerichteten Spaltes (5m) kommenden Gasfilmschmiermittels, wobei die genannten Kanäle (6) eine erste Öffnung (6i) aufweisen, die zu dem genannten inneren Hohlraum der elektrischen Spindel (1) ausgerichtet ist, wobei der genannte innere Hohlraum dazu vorgesehen ist, von dem Gasfilmschmiermittel wenigstens von dem genannten Ende (5mi) zu der genannten, nach innen gerichteten Öffnung (6i) durchlaufen zu werden, wobei die genannten Kanäle (6) ausserdem eine zweite Öffnung (6e) aufweisen, nach aussen gerichtet und dem Raum (8) zugewandt, der axial zwischen wenigstens einem Wälzlager (V) und einer kreisförmigen dynamischen Dichtung (7) beschrieben wird, die im Verhältnis zu dem genannten wenigstens einen Wälzlager (V) vorn angeordnet ist, so dass der genannte Raum (8) gegen den Eintritt von Staub in den genannten Hohlraum der elektrischen Spindel (1) einen Überdruck hat, wobei ebenfalls eine Kühlwirkung mit Hilfe der Fliesgeschwindigkeit der von dem genannten Ende (5mi) des genannten Spaltes (5m) zu der nach aussen gerichteten Öffnung (6e) durchlaufenden Flüssigkeit erzeugt wird, und so, dass ausserdem das Gasfilmschmiermittel daran gehindert wird, durch das genannte wenigstens eine Wälzlager (V) zu fliessen und damit die entsprechende Ölschmierung abzuwaschen.

## Revendications

1. Une broche électrique (1) pour entraîner en rotation des outils d'enlèvement de copeaux à haute vitesse sur des centres d'usinage à commande numérique pour le travail du bois et similaires, comprenant au moins :
- une carcasse (2) également composée de plusieurs parties rendues mutuellement solidaires, intérieurement creuse et présentant une géométrie interne ayant des segments essentiellement cylindriques et étant essentiellement symétrique par rapport à un axe longitudinal Z, ladite carcasse étant destinée à être fixée, extérieurement, sur ledit centre d'usinage et, intérieurement, au support d'un arbre (3) tournant par rapport à elle ; ledit arbre (3) présentant une symétrie axiale, étant également composé de plusieurs parties rendues mutuellement solidaires et destiné à retenir un outil dans sa portion avant, et étant supporté au niveau de deux de ses propres segments axiaux, à savoir, un segment axial avant (A1) et un segment axial arrière (A2), qui correspondent à des segments axiaux (C1) et (C2) respectifs de la carcasse, de manière à ce que son axe de rotation coïncide avec ledit axe Z de la carcasse ;
- un moteur électrique rotatif (4) avec son arbre coïncidant avec ledit arbre (3), dont le bloc électrique rotorique (4r) fait partie de la périphérie de l'arbre (3) en question et est disposé entre lesdits segments avant (A1) et arrière (A2), et dont le bloc électrique statorique (4s) fait partie intégrante de ladite carcasse (2) ;
- un ou plusieurs roulements (V) à éléments roulants interposés dans l'espace radial entre ledit segment avant (A1) de l'arbre et ledit segment (C1) correspondant de la carcasse ;
ladite broche électrique étant **caractérisée en ce que** le support de l'arbre (3) susmentionné au niveau de son propre segment arrière (A2) se fait au moyen d'un roulement (5) à lubrification gazeuse ayant une capacité de charge radiale, du type avec gaz sous pression dans un méat (5m) existant entre des surfaces cylindriques circulaires, où la partie tournante du roulement (5) en question est représentée par le même segment arrière (A2) d'arbre en forme de queue cylindrique et la partie fixe est représentée par le même segment (C2) de carcasse en forme de renfoncement cylindrique avec des trous pour l'injection du lubrifiant gazeux, ledit méat (5m) étant défini par le jeu radial entre ledit segment d'arbre (A2) en forme de queue cylindrique et ledit segment de carcasse (C2) correspondant en forme de renfoncement cylindrique.

2. La broche électrique selon la revendication 1, **caractérisée en ce qu'**au moins un roulement à éléments roulants (V) constitue une contrainte radiale et axiale pour ledit arbre (3) au niveau de son propre segment (A1) susmentionné, tandis que ledit roulement (5) à lubrification gazeuse constitue une contrainte exclusivement radiale pour ledit arbre (3) au niveau de son propre segment (A2) susmentionné.

3. La broche électrique selon la revendication 2, **caractérisée en ce que** pour ledit arbre (3), ledit au moins un roulement à éléments roulants (V) constitue une contrainte radiale et axiale équivalant essentiellement à une charnière sphérique fixe placée au niveau du segment (A1) susmentionné, tandis que ledit roulement (5) à lubrification gazeuse constitue une contrainte exclusivement radiale équivalant essentiellement à une charnière sphérique avec patin placée au niveau du segment (A2) susmentionné, de sorte que ledit arbre (3) est contraint de manière isostatique par rapport à ladite carcasse (2).

4. La broche électrique selon une des revendications précédentes, **caractérisée en ce que** dans l'épaisseur radiale de ladite carcasse (2) et au niveau du segment avant (C1) susmentionné de celle-ci, des conduits débouchants (6) sont réalisés, prévus pour l'écoulement du lubrifiant gazeux provenant postérieurement de l'extrémité (5mi) du méat (5m) orientée vers la cavité interne de ladite broche électrique (1), lesdits conduits (6) présentant un premier orifice (6i) orienté vers ladite cavité interne de la broche électrique, ladite cavité interne pouvant être traversée par le lubrifiant gazeux au moins de ladite extrémité (5mi) jusqu'à l'orifice (6i) en question orienté vers l'intérieur, lesdits conduits (6) présentant également un second orifice (6e) orienté vers l'extérieur et faisant face à l'espace (8) défini axialement entre ledit au moins un roulement à éléments roulants (V) et une garniture dynamique circulaire (7) antérieurement placée par rapport à ce même au moins un roulement à éléments roulants (V), de sorte que ledit espace (8) est pressurisé contre l'entrée de poussières dans ladite cavité de la broche électrique, un effet de refroidissement étant également créé par l'intermédiaire du flux de fluide transitant depuis ladite extrémité (5mi) du méat (5m) jusqu'à l'orifice (6e) orienté vers l'extérieur, et de sorte également que le lubrifiant gazeux est empêché de passer à travers ledit au moins un roulement à éléments roulants (V), ce qui évite le lavage conséquent du lubrifiant huileux correspondant.
